# EUROPEAN PATENT SPECIFICATION

(11) **EP 1 880 902 B1**
(45) Date of publication and mention of the grant of the patent: **03.04.2013**
(21) Application number: 07381042.6
(22) Date of filing: 18.05.2007
(51) Int. Cl.: B60R 5/04, E05D 7/10

(54) **Mounting system for a boot tray of an automobile**
Befestigungssystem einer Gepäckraumabdeckung eines Kraftfahrzeuges
Système de montage d'une tablette arrière de véhicule automobile

(30) Priority: 19.07.2006 ES 200601922
(43) Date of publication of application: 23.01.2008
(73) Proprietor: GRUPO ANTOLIN-INGENIERIA, S.A., 09007 Burgos (ES)
(72) Inventor: Raúl, Santamaría Ortega, 09620, SALDAÑA DE BURGOS (Burgos) (ES); Alberto, Sánchez Lite, 47007, VALLADOLID (ES)
(74) Representative: Capitán García, Maria Nuria

(56) References cited:
- EP-A2- 1 364 834
- EP-B1- 0 820 390
- DE-A1- 3 513 577
- DE-A1- 19 723 838

## Description

### OBJECT OF THE INVENTION

The present invention refers to vehicle tray coupling means, a tray comprising coupling means and a procedure for the installation of same.

The invention has its application in motor vehicle trays located in the rear part of same which are intended to separate the inner passenger compartment from the boot area.

The coupling means are defined by claim 1.

The procedure for the installation of the tray is defined by claim 8. A tray having the coupling means is defined by claim 9.

### BACKGROUND OF THE INVENTION

Normally the trays situated in the rear part of the vehicle have pins built into their sandwich structure, thereby representing additional parts that increase the cost of the end product.

There are trays that resolve the above problem by dispensing with these additional parts and integrating the swivel pins into the actual tray.

By way of example we may cite the patent with publication number EP0820390 which protects a removable tray and its associated support bracket. The tray includes a pair of anterior corners and supplemental surfaces that house these corners of same. Each one of the lateral supports includes a surface on which the lower surface of the tray rests when it is installed in the vehicle, a coupling element that receives the anterior corner of the tray and permits its relative rotation in respect of the supports for its installation and removal in order to prevent its back and forth movement when installed.

The drawback of the tray described in patent EP0820390 is that its anterior area is subject to constant stress during its use due to the fact that the rotation axis of the tray is established by means of contact between this area and the complementary area on the lateral support. This type of solution, therefore, limits the tray manufacturing technology through requiring substantial thicknesses of same.

We may also cite the patent with publication number EP1452393 entitled "Removable vehicle tray and associated fixing device", which protects a motor vehicle rear tray that comprises a main element and two lateral wedges for fitting to two lateral supports. Each one of the wedges is made up of a dished profile tang that is inserted in an opposing recess in the support.

The disadvantage presented by patent EP1452393 is that due to the dished configuration of the front area it has to be installed in the vertical position so as to enable this front area to enter its end position. In the tray folding movement, once the front area is inserted, mechanical interference may take place with other vehicle parts, such as the rear pillars for instance, so that this type of configuration could predetermine the design of other parts of the vehicle.

In other cases, instead of the tray incorporating the pins, these are located on the lateral supports. A tray type is known that incorporates the pins on these lateral supports located in the vehicle boot, such that by means of recesses provided in the ends located at the rear of the tray, this is engaged and permits its rotation when the vehicle hatchback is opened. As an example of devices of this type we cite the Japanese patent with publication number JP57138446 "Vehicle rear tray".

In order to be able to dispense with these pins which constitute additional parts, the patent is known with publication W02004074044 "Boot tray support", which protects a tray that includes a member that performs a clipping action on a swivel pin element built into the lateral supports. Through making use of a clip, it is possible to hold the tray in any position in respect of the horizontal without the need to make use of rear cords for raising and lowering purposes. This clipping also permits the retaining of the tray both in the direction corresponding to vehicle forward movement and in the vertical direction.

It is known in the State of the art a retaining and articulating device for a rear shelf as the one disclosed in EP 1364834 A1, which comprises a support fixed to the vehicle. The support comprises a shaft and the shelf comprises a long bore having an opening along its length allowing the engagement and disengagement of the shaft in the bore by elastic deformation of the bore. The shelf is moved by shaft rotation in the bore between bottom and top positions and comprises a lever zone supported on the support in the shelf top position in order to release the shaft.

The tray coupling means that are the object of the invention possess means of rotation that overcome the previous disadvantages by means of dispensing with the pins as an independent reference thus providing easier installation by means of a suitable geometry that does not predetermine the design of other parts located in the boot area and which does not introduce any additional part. The coupling also means possess suitable means for retaining the tray both in the direction of forward movement of the vehicle and in the vertical direction, the latter to prevent vibration noise being generated.

### DESCRIPTION OF THE INVENTION

The present invention refers to vehicle tray coupling means, a tray having said means, and a procedure for the installation of same.

Trays are elements provided in the rear part of the vehicle in order to separate the boot area from the interior passenger compartment.

The tray is made up of a mainly flat rigid panel, which rests at its lateral anterior ends on support elements provided on the lateral supports of the boot.

In addition, the tray has to offer the possibility of being raised in order to obtain convenient access to the boot space. For this reason it is normally provided with cords that connect it to the rear hatchback of the vehicle, so that when this is raised, the tray is also lifted permitting access to the load area. In order to bring about this raising, the tray has joints at its anterior part.

This joint is usually composed of pins built into the anterior ends of its sides. These pins are inserted into recesses provided in the anterior part of the lateral supports, configuring the tray joint.

The rigid surface area of the tray is usually composed of a sandwich of materials which is produced by means of a heat-forming process. In some cases the pins are positioned as an insert between the layers forming the surface area of the tray.

The swivel pins therefore require the use of additional parts, which leads to a considerable increase in the cost of the tray.

The present invention dispenses with the pins as an additional part of the tray in order to achieve a product with a lower production cost, both by reducing the number of parts and by the application of simpler manufacturing techniques.

The coupling means of the tray that is the object of the invention are defined by claim 1.

In the horizontal position of the tray the cylindrical sectors of the recesses in same ensure that it is retained in the direction of forward movement of the vehicle.

In the process of rotation of the tray the surface area of the support which essentially follows the path of rotation of the anterior end of the tray limits the possible movement of the cylindrical sector of the recess in the tray in respect of the cylindrical sector of the support swivel pin, thereby stopping the two elements from becoming disengaged during tray rotation.

Both the cylindrical sector of the support pin and the cylindrical sector of the tray recess are co-axial, while their geometric axis also coincides with their rotation axis, which is also that of the tray assembly. However, the centre of the radius of curvature of the surface area limiting radial movement does not have to have a constant radius of curvature nor have a single centre, without it therefore not being an arc very close geometrically to a cylinder arc, producing thereby areas of varying pressure between the curvature and the anterior end of the tray, thus achieving better retention of same and spatial separation between the tray rotating means and the retaining means and, therefore, the independence of both functions.

The procedure for installing said tray comprises at least the following steps:
Step 1: inclined positioning of the tray in respect of the lateral supports and insertion until its anterior end comes up against the surface of the support limiting the radial movement of the tray.
Step 2: contact between the cylindrical tray bearing and friction sectors and the support.
Step 3: folding of the tray to a position essentially parallel to the lateral supports.

The tray having the coupling means that are the object of the invention is further characterised in that its thickness is constant along its whole length. The fact of its being able to maintain this constancy in thickness is due to the type of material that is used. The use of a tray of a constant thickness means that we obtain increased accommodation in the vehicle and more space in the boot, while at the same time its weight is reduced. Furthermore, the manufacture of a constant thickness tray requires shorter production cycles and simpler jigs.

### DESCRIPTION OF THE DRAWINGS

The present descriptive report is accompanied by a set of drawings depicting the preferred but never restrictive specimen embodiment of the invention.

Figure 1 is a diagrammatic perspective representation of a tray situated between the lateral supports in the horizontal position.

Figure 2 is a diagrammatic perspective representation of a first specimen tray embodiment.

Figure 3 is a diagrammatic perspective representation of a support intended to receive the tray of the specimen embodiment of figure 2.

Figure 4 is a diagrammatic lateral view of a specimen of the invention showing the layout of the tray and its corresponding support.

Figure 5 is a diagrammatic perspective representation of a third specimen layout of the tray.

Figure 6 is a set of diagrammatic sections representing the evolution of the installation linkage of a tray and its associated support in accordance with the specimen embodiment of the invention of figures 2 and 3.

### PREFERRED EMBODIMENT OF THE INVENTION

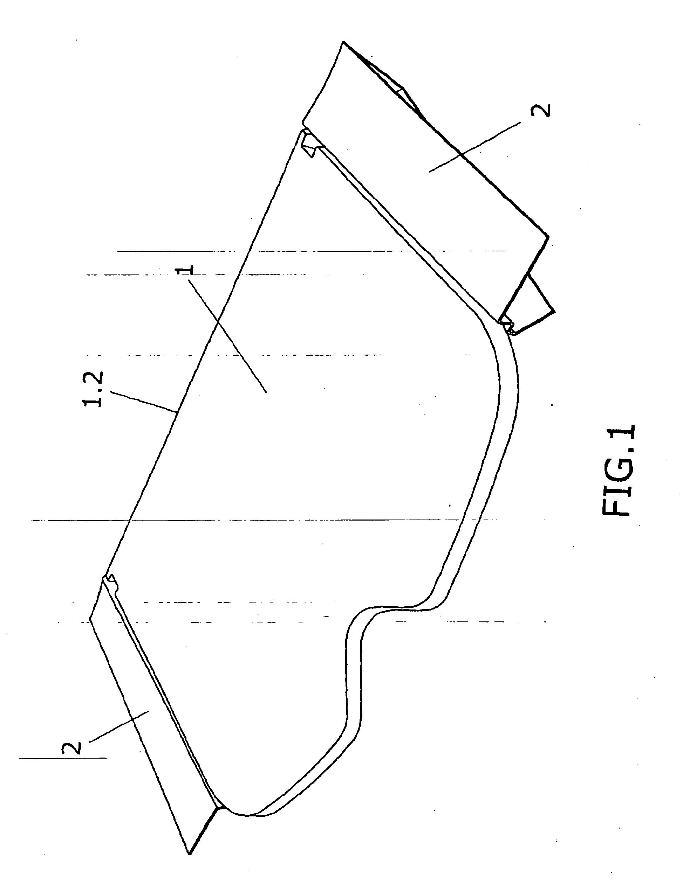

Figure 1 represents a tray (1) in the horizontal position and its lateral supports (2), both elements (1, 2) being coupled in the anterior area (1.2) of same (1).

The coupling means of the tray (1) and its associated support (2) may adopt various embodiments. Said coupling means comprise in turn means that permit the rotation of the tray (1) and means for retaining its radial and vertical movement. The term "radial" refers to a movement of the cylindrical sector of the tray in respect of the cylindrical sector of the support in the direction perpendicular to the rotation axis and "vertical" to direction Z according to the orientation of the vehicle. In this way, smooth uninterrupted rotation of the tray (1) is achieved and noise and vibration in same (1) are prevented.

The tray (1) possesses recesses (1.1), constituted in the cylindrical sectors (1.1.1), which may be greater or smaller than 180 deg.. In the event of the cylindrical sector (1.1.1) being more than 180 deg. , a clipping action will take place between the two elements (1, 2).

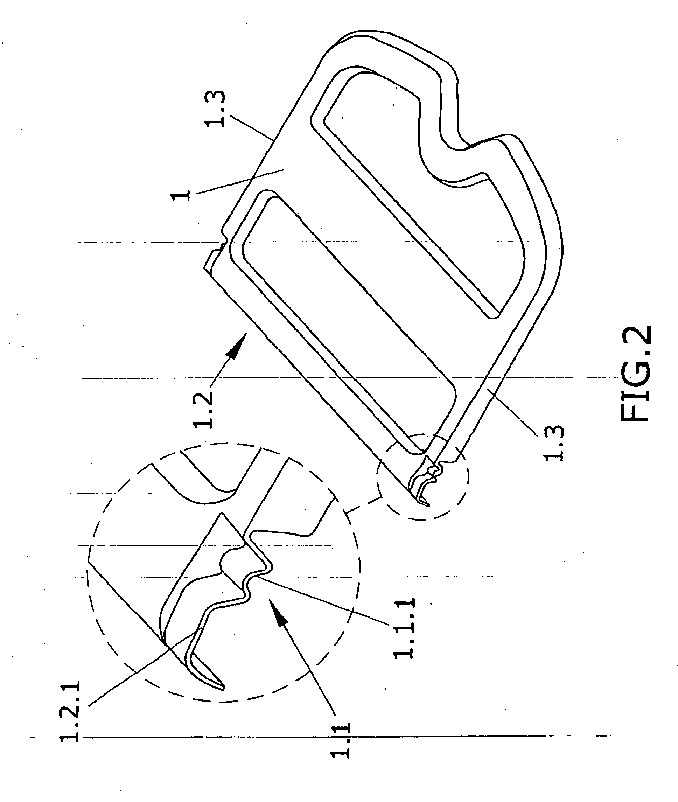

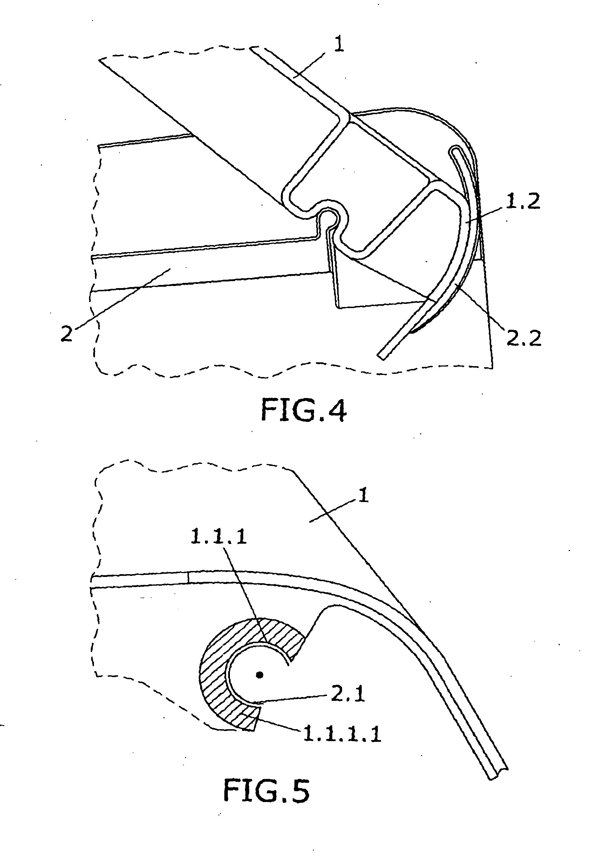

Figures 2, 3, 4 represent cases in which the cylindrical sector (1.1.1) of the recesses (1.1) in the tray (1) is 180 deg. or less; an embodiment is represented in figure 5 in which the cylindrical sector (1.1.1) is greater than 180 deg.. In this case said cylindrical sectors (1.1.1) encircle and are secured by clipping to the pins (2.1) of the supports (2). In this way, in this case presented in figure 5, besides permitting rotation between tray (1) and support (2), we obtain the vertical retention of the tray (1) on the same axis.

Figure 2 represents a tray (1) whose means for limitation of movement in the radial direction consist of a surface area (2.2) of the support (2) that essentially follows the path of rotation of the anterior end (1.2) of the tray, specifically of its final end (1.2.2).

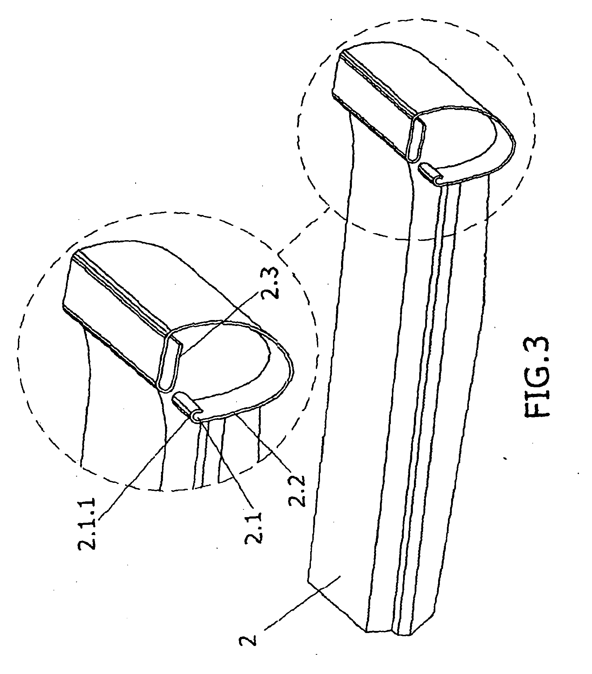

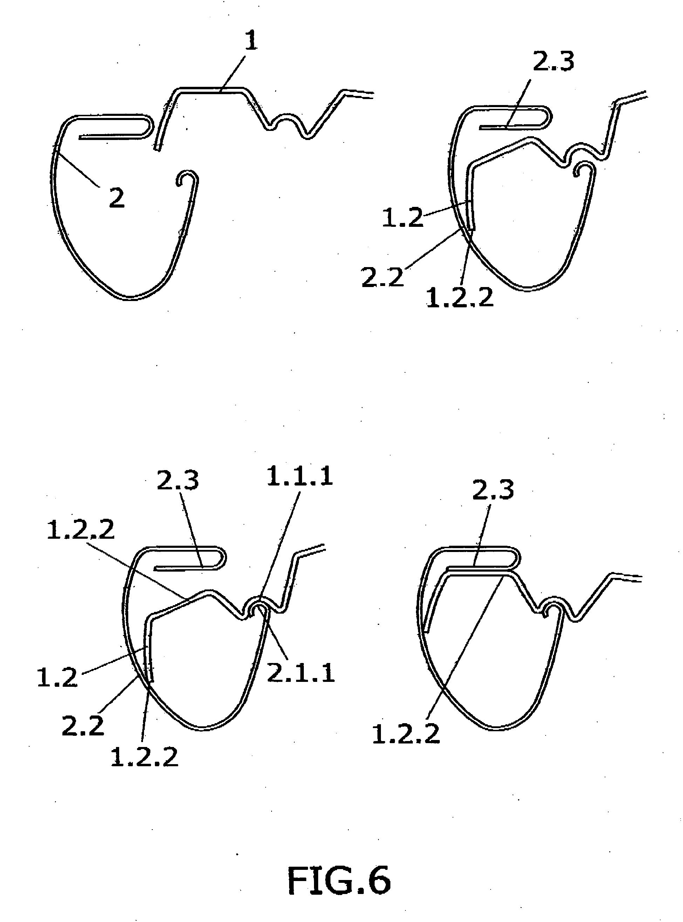

The tray (1) of figure 2 also has vertical retaining means that consist of the presence of at least one horizontal section (1.2.1) at the anterior end (1.2) of the tray (1) which in the operational position of same (1) is situated inferiorly and in contact with another horizontal section (2.3) located on the support (2), see figures 3 and 6.

Figure 4 represents another embodiment of the vehicle tray coupling means. In this case both the radial retention and the vertical retention are effected by way of means formed by the anterior end (1.2) of the tray (1). The surface area of said end (1.2) possesses a curvature coinciding essentially with the curvature of the surface (2.2) of the support (2) that limits movement in the radial direction. The contact between both surfaces (1.2, 2.2) in the operational position of the tray (1) establishes the retention of same (1). In this embodiment, the contact between the anterior end (1.2) of the tray (1) and the surface (2.2) of the support (2) is effected at all points of both surfaces, not only at the end edge (1.2.2) of same, thereby achieving not only the radial retention of the tray (1), but also its vertical retention without any need for horizontal bearing sections (1.2.1, 2.3) to perform this function.

Another embodiment of the coupling means - not shown - corresponds to the case in which the cylindrical sectors (1.1.1) in which the recesses (1.1) in the tray (1) are constituted are equal to 90 deg. 10 deg. , the recesses (1.1) being prolonged on the posterior side with a straight section tangent to said cylindrical sector (1.1.1), so that in this way better guiding the tray (1) is obtained during its installation.

Figure 5 represents an embodiment in which the cylindrical sectors (1.1.1) comprise arcs greater than 180 deg. , although any of the foregoing embodiments may also be constituted with these sectors.

To facilitate the insertion of the cylindrical sector (1.1.1) of the tray (1) on the pin (2.1) of the support (2), said cylindrical sector (1.1.1) may be made from an elastomeric material (1.1.1.1) and therefore be deformable.

The procedure for installation of the vehicle tray which consists of the above-described coupling means is characterised in that it comprises at least the following steps, which have a sequence as depicted in Figure 6:
Step 1: inclined positioning of the tray (1) in respect of the lateral supports (2) and insertion until its anterior end (1.2) comes up against the inner surface (2.2) of the support (2).
Step 2: contact between the cylindrical bearing and friction sectors (1.1.1, 2.1.1) of the tray (1) and the support (2).Step 3: folding of the tray (1) to a position essentially parallel to the lateral supports (2)

The tray (1) having the coupling means described in the preferred embodiment possesses a thickness of 8 mm or less, thereby achieving greater lightness and reducing the possibility of vibrations and noise

## Claims

1. Vehicle tray coupling means, **characterised in that** they comprise at least:
means of rotation in respect of a fixed swivel pin (2.1),
being the means of rotation formed by recesses (1.1) in a tray (1) constituted by a cylindrical sector (1.1.1) located in an anterior area (1.2) of the lateral ends (1.3) of the tray (1) and
being the fixed swivel pin (2.1) formed by pins integrated in fixed lateral supports (2), provided on lateral supports of a boot, said pins being constituted by at least one cylindrical sector (2.1.1) of bearing and friction to the cylindrical sector (1.1.1)
so that both cylindrical sectors (1.1.1, 2.1.1) are operatively in contact, thereby permitting the rotation of the tray (1) in respect of the fixed swivel pin (2.1); and
means for limitation of movement of the tray (1) in a radial direction, that is, in a direction perpendicular to the rotation axis of the tray (1) during tray (1) rotation by providing contact between the anterior end (1.2) of the tray (1) and the surface of at least one surface area (2.2) of the support (2), said surface area having a curvature along the rotation path of the anterior end (1.2) of the tray (1) during the rotation,
wherein the means are separated from one another in spatial terms.

2. Vehicle tray coupling means, according to claim 1, **characterised in that** they have means for the retention of the tray (1) in a direction perpendicular to the lateral support (2), which consist of the presence of at least one horizontal section (1.2.1) at the anterior end (1.2) of the tray (1), which in the operational position of same (1) is situated inferiorly and in contact with another horizontal section (2.3) situated on the support (2).

3. Vehicle tray coupling means, according to claim 1, **characterised in that** they comprise means for retaining the tray (1) composed of the anterior end (1.2) of same (1), the surface of which has a curvature essentially matching the curvature of the surface (2.2) of the support (2) that limits the movement of the tray in the direction perpendicular to the rotation axis of the tray (1) during the tray (1) rotation, such that the contact between both surfaces (1.2, 2.2) in the operational position of the tray (1) establishes both, the retention of the tray (1) in the direction perpendicular to the rotation axis of the tray (1) during the tray (1) rotation and the retention of the tray (1) in the direction perpendicular to the lateral support (2).

4. Vehicle tray coupling means, according to claim 1, **characterised in that** the cylindrical sectors (1.1.1) in which the recesses (1.1) in the tray (1) are constituted are 180 deg. or less.

5. Vehicle tray coupling means, according to claim 1, **characterised in that** the cylindrical sectors (1.1.1) in which the recesses (1.1) in the tray (1) are constituted are equal to 90 deg. 10 deg., being prolonged on the posterior side of the recesses (1.1) with a straight section tangent to said cylindrical sector (1.1.1) for purposes of better guidance of the tray in its installation.

6. Vehicle tray coupling means, according to claim 1, **characterised in that** the cylindrical sectors (1.1.1) in which the recesses (1.1) in the tray (1) are constituted are greater than 180 deg. for the clipping of same (1.1.1) on the pin (2.1) of the support (2).

7. Vehicle tray coupling means, according to claim 6, **characterised in that** the cylindrical sector (1.1.1) in the recess (1.1) in the tray (1) is made from an elastomeric material (1.1.1.1) to facilitate its coupling by clipping to the pin (2.1) of the support (2).

8. Procedure for installation of a vehicle tray to a support, said vehicle tray and said support comprising coupling means which comprises ,
means of rotation in respect of a fixed swivel pin (2.1),
being the means of rotation formed by recesses (1.1) in a tray (1) constituted by a cylindrical sector (1.1.1) located in an anterior area (1.2) of the lateral ends (1.3) of the tray (1) and
being the fixed swivel pin (2.1) formed by pins integrated in fixed lateral supports (2), said pins being constituted by at least one cylindrical sector (2.1.1) of bearing and friction to the cylindrical sector (1.1.1)
so that both cylindrical sectors (1.1.1, 2.1.1) are operatively in contact, thereby permitting the rotation of the tray (1) in respect of the fixed swivel pin (2.1); and
means for limitation of movement of the tray (1) in a radial direction, that is, in a direction perpendicular to the rotation axis of the tray (1) during tray (1) rotation by providing contact between the anterior end (1.2) of the tray (1) and the surface of at least one surface area (2.2) of the support (2), said surface area having a curvature along the rotation path of the anterior end (1.2) of the tray (1) during the rotation,
wherein the means are separated from one another in spatial terms. **characterised in that** the procedure comprises at least the following steps:
Step 1: inclined positioning of the tray (1) in respect of the lateral supports (2) and insertion until its anterior end (1.2) comes up against the inner surface (2.2) of the support (2).
Step 2: contact between the cylindrical bearing and friction sectors (1.1.1, 2.1.1) of the tray (1) and the support (2).
Step 3: folding of the tray (1) to a position essentially parallel to the lateral supports (2).

9. Tray for a vehicle having coupling means an lateral supports **characterised by** the coupling means comprising:
means of rotation in respect of a fixed swivel pin (2.1),
being the means of rotation formed by recesses (1.1) in a tray (1) constituted by a cylindrical sector (1.1.1) located in an anterior area (1.2) of the lateral ends (1.3) of the tray (1) and
being the fixed swivel pin (2.1) formed by pins integrated in fixed lateral supports (2), said pins being constituted by at least one cylindrical sector (2.1.1) of bearing and friction to the cylindrical sector (1.1.1)
so that both cylindrical sectors (1.1.1, 2.1..1) are operatively in contact, thereby permitting the rotation of the tray (1) in respect of the fixed swivel pin (2.1); and
means for limitation of movement of the tray (1) in a radial direction, that is, in a direction perpendicular to the rotation axis of the tray (1) during tray (1) rotation by providing contact between the anterior end (1.2) of the tray (1) and the surface of at least one surface area (2.2) of the support (2), said surface area having a curvature along the rotation path of the anterior end (1.2) of the tray (1) during the rotation,
wherein the means are separated from one another in spatial terms.

10. Tray for a vehicle according to claim 9, **characterized in that** its thickness is constant over its whole length.

11. Tray for a vehicle according to claim 10 **characterized in that** its thickness is 8 mm.

## Patentansprüche

1. Kopplungsmittel für Fahrzeugablagen, die mindestens eine Vorrichtung zur Drehung gegenüber einem fest angebrachten Schwenkzapfen (2.1) umfassen,
wobei diese Drehvorrichtung von Einschnitten (1.1) in einer Ablage (1) gebildet wird, die als zylindrischer Abschnitt (1.1.1) in einem vorgelagerten Bereich (1.2) der seitlichen Enden (1.3) der Drehvorrichtung (1) ausgeführt sind,
wobei der fest angebrachte Schwenkzapfen (2.1) aus fest in seitlichen Halterungen (2) des Kofferraumes angebrachten Stiften besteht, die mindestens einen zylindrischen Abschnitt (2.1.1) als Lagerung und mit Reibung gegenüber dem zylindrischen Abschnitt (1.1.1) besitzen,
sodass beide zylindrische Abschnitte (1.1.1 und 2.1.1) bei der Funktion miteinander in Kontakt stehen, auf diese Weise die Drehung der Ablage (1) bezüglich des fest angebrachten Schwenkzapfens (2.1) gestatten,
und außerdem Mittel zur Begrenzung der Bewegung der Ablage (1) in radialer Richtung, das heißt, senkrecht zur Drehachse der Ablage (1) während ihrer Drehung, wobei der Kontakt zwischen dem vorderen Ende (1.2) der Ablage (1) und der Oberfläche mindestens eines Flächenbereichs (2.2) der Halterung (2) diese Begrenzung herstellt, die genannte Fläche entlang des Drehungswegs des vorderen Endes (1.2) der Ablage (1) bei der Drehung gekrümmt ist
und diese Vorrichtungen räumlich voneinander getrennt sind.

2. Kopplungsmittel für Fahrzeugablagen nach Anspruch 1, die über eine Vorrichtung zum Zurückhalten der Ablage (1) in senkrechter Richtung zu den seitlichen Halterungen (2) verfügen, wobei diese Vorrichtung aus mindestens einem horizontalen Abschnitt (1.2.1) am vorderen Ende (1.2) der Ablage (1) besteht, der sich in Funktionsposition der Ablage (1) unten befindet und in Kontakt mit einem weiteren horizontalen Abschnitt (2.3) steht, der an der Halterung (2) angebracht ist.

3. Kopplungsmittel für Fahrzeugablagen nach Anspruch 1, die über eine Vorrichtung zum Zurückhalten der Ablage (1) verfügen, wobei diese Vorrichtung aus dem vorderen Ende (1.2) der Ablage (1) besteht, dessen Oberfläche eine Krümmung besitzt, die im Wesentlichen der Krümmung der Fläche (2.2) der Halterung (2) gleicht und die Bewegung der Ablage (1) in senkrechter Richtung zu ihrer Drehachse begrenzt, sodass der Kontakt zwischen beiden Flächen (1.2 und 2.2) in der Funktionsposition der Ablage (1) die Rückhaltung der Ablage (1) bei ihrer Drehung sowohl senkrecht zu ihrer Drehachse als auch senkrecht zur seitlichen Halterung (2) herstellt.

4. Kopplungsmittel für Fahrzeugablagen nach Anspruch 1, **dadurch gekennzeichnet, dass** ihre zylindrischen Abschnitte (1.1.1), in weichen die Einschnitte (1.1) in der Ablage (1) vorgenommen sind, einen Winkel von höchstens 180 Grad beschreiben.

5. Kopplungsmittel für Fahrzeugablagen nach Anspruch 1, **dadurch gekennzeichnet, dass** ihre zylindrischen Abschnitte (1.1.1), in welchen die Einschnitte (1.1) in der Ablage (1) vorgenommen sind, einen Winkel von 90 Grad bilden, wobei sich 10 Grad an der Rückseite der Einschnitte (1.1) als gerader Abschnitt fortsetzen, der eine Tangente am genannten zylindrischen Abschnitt (1.1.1) bildet, um in dieser Installation eine bessere Führung der Ablage (1) zu gewährleisten.

6. Kopplungsmittel für Fahrzeugablagen nach Anspruch 1, **dadurch gekennzeichnet, dass** ihre zylindrischen Abschnitte (1.1.1), in welchen die Einschnitte (1,1) in der Ablage (1) vorgenommen sind, einen Winkel von über 180 Grad bilden, um diese Abschnitte (1.1.1) am Zapfen (2.1) der Halterung (2) festzuklammern.

7. Kopplungsmittel für Fahrzeugablagen nach Anspruch 6, **dadurch gekennzeichnet, dass** ihr zylindrischer Abschnitt (1.1.1) im Einschnitt (1.1) der Ablage (1) aus einem Elastomer (1.1.1.1) besteht, um die Ankopplung dieses Abschnitts durch Festklammern am Zapfen (2.1) der Halterung (2) herzustellen.

8. Verfahren zur Installation einer Fahrzeugablage an einer Halterung, wobei diese Ablage und die erwähnte Halterung mit Kopplungsmitteln ausgestattet sind, die Vorrichtungen zur Drehung bezüglich eines fest angebrachten Schwenkzapfens (2.1) umfassen,
wobei diese Drehvorrichtung von Einschnitten (1.1) in einer Ablage (1) gebildet wird, die als zylindrischer Abschnitt (1.1.1) in einem vorgelagerten Bereich (1.2) der seitlichen Enden (1.3) der Drehvorrichtung (1) ausgeführt sind,
und wobei der fest angebrachte Schwenkzapfen (2.1) aus fest in seitlichen Halterungen (2) des Kofferraumes angebrachten Stiften besteht, die mindestens einen zylindrischen Abschnitt (2.1.1) als Lagerung und mit Reibung gegenüber dem zylindrischen Abschnitt (1.1.1) besitzen,
sodass beide zylindrische Abschnitte (1.1.1 und 2.1.1) bei der Funktion miteinander in Kontakt stehen, auf diese Weise die Drehung der Ablage (1) bezüglich des fest angebrachten Schwenkzapfens (2.1) gestatten,
und außerdem Mittel zur Begrenzung der Bewegung der Ablage (1) in radialer Richtung, das heißt, senkrecht zur Drehachse der Ablage (1) während ihrer Drehung, wobei der Kontakt zwischen dem vorderen Ende (1.2) der Ablage (1) und der Oberfläche mindestens eines Flächenbereichs (2.2) der Halterung (2) diese Begrenzung herstellt, die genannte Fläche entlang des Drehungswegs des vorderen Endes (1.2) der Ablage (1) bei der Drehung gekrümmt ist
und diese Vorrichtungen räumlich voneinander getrennt sind,
**dadurch gekennzeichnet, dass** das Verfahren mindestens die folgenden Schritte umfasst:
Schritt 1: geneigte Positionierung der Ablage (1) hinsichtlich der seitlichen Halterungen (2) und Einfügen, bis ihr vorderes Ende (1.2) gegen die innere Fläche (2.2) der Halterung (2) heraussteht;
Schritt 2: Kontakt zwischen der zylindrischen Lagerung und den Reibungsabschnitten (1.1.1, 2.1.1) der Ablage (1) und der Halterung (2);
Schritt 3: Falten der Ablage (1) in eine Position, die im Wesentlichen parallel zu den seitlichen Halterungen (2) liegt.

9. Ablage für ein Fahrzeug, mit Kopplungsmitteln auf den seitlichen Halterungen ausgestattet und **dadurch gekennzeichnet, dass** diese Kopplungsmittel folgende Elemente umfassen:
Vorrichtung zur Drehung gegenüber einem fest angebrachten Schwenkzapfen (2.1),
wobei diese Drehvorrichtung von Einschnitten (1.1) in einer Ablage (1) gebildet wird, die als zylindrischer Abschnitt (1.1.1) in einem vorgelagerten Bereich (1.2) der seitlichen Enden (1.3) der Ablage (1) ausgeführt sind,
wobei der fest angebrachte Schwenkzapfen (2.1) aus fest in seitliche Halterungen (2) des Kofferraumes angebrachten Stiften besteht, die mindestens einen zylindrischen Abschnitt (2.1.1) als Lagerung und mit Reibung gegenüber dem zylindrischen Abschnitt (1.1.1) besitzen,
sodass beide zylindrische Abschnitte (1.1.1 und 2.1.1) bei der Funktion miteinander in Kontakt stehen und auf diese Weise die Drehung der Ablage (1) bezüglich des fest angebrachten Schwenkzapfens (2.1) gestatten;
darüber hinaus Mittel zur Begrenzung der Bewegung der Ablage (1) in radialer Richtung, das heißt, senkrecht zur Drehachse der Ablage (1) während ihrer Drehung, wobei der Kontakt zwischen dem vorderen Ende (1.2) der Ablage (1) und der Oberfläche mindestens eines Flächenbereichs (2.2) der Halterung (2) diese Begrenzung herstellt, die genannte Fläche entlang des Drehungswegs des vorderen Endes (1.2) der Ablage (1) bei der Drehung gekrümmt ist
und diese Vorrichtungen räumlich voneinander getrennt sind.

10. Ablage für ein Fahrzeug nach Anspruch 9, **dadurch gekennzeichnet, dass** ihre Stärke über ihre gesamte Länge hinweg konstant ist.

11. Ablage für ein Fahrzeug nach Anspruch 10, **dadurch gekennzeichnet, dass** ihre Stärke 8 mm beträgt.

## Revendications

1. Moyens de couplage de plateau de véhicule, **caractérisés en ce qu'**ils comprennent au moins des moyens de rotation par rapport à un axe de pivotement fixe (2.1),
les moyens de rotation étant formé par des évidements (1.1) dans un plateau (1) constitué par un secteur cylindrique (1.1.1) situé dans une zone antérieure (1.2) des extrémités latérales (1.3) du plateau (1) et
l'axe de pivotement fixe (2.1) étant formé par des broches intégrées dans des supports latéraux fixes (2), prévu sur des supports latéraux d'un coffre, lesdites broches étant constituées par au moins un secteur cylindrique (2.1.1) de soutien et friction par rapport au secteur cylindrique (1.1.1),
de manière que les deux secteurs cylindriques (1.1.1, 2.1.1) sont opérationnellement en contact, en permettant ainsi la rotation du plateau (1) par rapport à la broche de pivotement fixe (2.1) ; et
des moyens pour limiter le mouvement du plateau (1) dans une direction radiale, c'est-à-dire, dans une direction perpendiculaire à l'axe de rotation du plateau (1) pendant la rotation du plateau (1) en fournissant un contact entre l'extrémité antérieure (1.2) du plateau (1) et la surface d'au moins une zone de surface (2.2) du support (2), ladite zone de surface ayant une courbure le long du trajet de rotation de l'extrémité antérieure (1.2) du plateau (1) pendant la rotation,
dans lesquels les moyens sont séparés entre eux de manière spatiale.

2. Moyens de couplage de plateau de véhicule, selon la revendication 1, **caractérisés en ce qu'**ils ont des moyens pour la rétention du plateau (1) dans une direction perpendiculaire au support latéral (2), lesquels consistent en une présence d'au moins une section horizontale (1.2.1) à l'extrémité antérieure (1.2) du plateau (1), qui à la position opérationnelle de celui-ci (1) est situé inférieurement et en contact avec une autre section horizontale (2.3) située sur le support (2).

3. Moyens de couplage de plateau de véhicule, selon la revendication 1, **caractérisés en ce qu'**ils comprennent des moyens de rétention du plateau (1) composés de l'extrémité antérieure (1.2) de celui-ci, dont la surface possède une courbure coïncidant essentiellement avec la courbure de la surface (2.2) du support (2) qui limite le mouvement du plateau dans la direction perpendiculaire à l'axe de rotation du plateau (1) pendant la rotation du plateau (1), de manière que le contact entre les deux surface (1.2, 2.2) dans la position opérationnelle du plateau (1) établit aussi bien, la rétention du plateau (1) dans la direction perpendiculaire à l'axe de rotation du plateau (1) pendant la rotation du plateau (1) que la rétention du plateau (1) dans la direction perpendiculaire au support latérale (2).

4. Moyens de couplage de plateau de véhicule, selon la revendication 1, **caractérisés en ce que** les secteurs cylindriques (1.1.1) dans lesquels sont constitués les évidements (1.1) dans le plateau (1) sont égaux à 180 degrés oui inférieurs.

5. Moyens de couplage de plateau de véhicule, selon la revendication 1, **caractérisés en ce que** les secteurs cylindriques (1.1.1) dans lesquels sont constitués les évidements (1.1) dans le plateau (1) sont égal à 90 degrés, 10 degrés, en étant prolongés du côté postérieur des évidemment (1.1) par une section droite tangente audit secteur cylindrique (1.1.1) aux fins du guidage du plateau lors de son installation.

6. Moyens de couplage de plateau de véhicule, selon la revendication 1, **caractérisés en ce que** les secteurs cylindriques (1.1.1) dans lesquels sont constitués les évidements (1.1) dans le plateau (1) sont supérieurs à 180 degrés pour l'encliquetage de ceux (1,1,1) sur la broche (2.1) du support (2).

7. Moyens de couplage de plateau de véhicule, selon la revendication 6, **caractérisés en ce que** le secteur cylindriques (1.1.1) dans lequel est constitués l'évidement (1.1) dans le plateau (1) est réalisé en une matière élastomère (1.1.1.1) pour faciliter son couplage par encliquetage à la broche (2.1) du support (2).

8. Procédé d'installation d'un plateau de véhicule sur un support, ledit plateau de véhicule et ledit support comprenant des moyens de couplage qui comprennent,
des moyens de rotation par rapport à un axe de pivotement fixe (2.1),
des moyens de rotation étant formé par des évidements (1.1) dans un plateau (1) constitué par un secteur cylindrique (1.1.1) situé dans une zone antérieure (1.2) des extrémités latérales (1.3) du plateau (1) et
l'axe de pivotement fixe (2.1) étant formé par des broches intégrées dans des supports latéraux fixes (2), lesdites broches étant constituées par au moins un secteur cylindrique (2.1.1) de soutien et friction par rapport au secteur cylindrique (1.1.1),
de manière que les deux secteurs cylindriques (1.1.1, 2.1.1) sont opérationnellement en contact, en permettant ainsi la rotation du plateau (1) par rapport à la broche de pivotement fixe (2.1) ; et
des moyens pour limiter le mouvement du plateau (1) dans une direction radiale, c'est-à-dire, dans une direction perpendiculaire à l'axe de rotation du plateau (1) pendant la rotation du plateau (1) en fournissant un contact entre l'extrémité antérieure (1.2) du plateau (1) et la surface d'au moins une zone de surface (2.2) du support (2), ladite zone de surface ayant une courbure le long du trajet de rotation de l'extrémité antérieure (1.2) du plateau (1) pendant la rotation,
dans lesquels les moyens sont séparés entre eux de manière spatiale,
**caractérisé en ce que** le procédé comprend au moins les étapes suivantes :
Etape 1 : positionnement incliné du plateau (1) par rapport aux supports latéraux (2) et son insertion jusqu'à ce que son extrémité antérieure (1,2) entre en contact avec la surface intérieure (2.2) du support (2).
Etape 2 : contact entre les secteurs de soutien et de friction (1.1.1, 2.1.1) du plateau (1) et le support (2).
Etape 3.- pliage du plateau (1) vers une position essentiellement parallèle aux supports latéraux (2).

9. Plateau pour un véhicule ayant des moyens de couplage sur des supports latéraux, **caractérisé par** les moyens de couplage qui comprennent,
des moyens de rotation par rapport à un axe de pivotement fixe (2.1),
des moyens de rotation étant formé par des évidements (1.1) dans un plateau (1) constitué par un secteur cylindrique (1.1.1) situé dans une zone antérieure (1.2) des extrémités latérales (1.3) du plateau (1) et
l'axe de pivotement fixe (2.1) étant formé par des broches intégrées dans des supports latéraux fixes (2), lesdites broches étant constituées par au moins un secteur cylindrique (2.1.1) de soutien et friction par rapport au secteur cylindrique (1.1.1),
de manière que les deux secteurs cylindriques (1.1.1, 2.1.1) sont opérationnellement en contact, en permettant ainsi la rotation du plateau (1) par rapport à la broche de pivotement fixe (2.1) ; et
des moyens pour limiter le mouvement du plateau (1) dans une direction radiale, c'est-à-dire, dans une direction perpendiculaire à l'axe de rotation du plateau (1) pendant la rotation du plateau (1) en fournissant un contact entre l'extrémité antérieure (1.2) du plateau (1) et la surface d'au moins une zone de surface (2.2) du support (2), ladite zone de surface ayant une courbure le long du trajet de rotation de l'extrémité antérieure (1.2) du plateau (1) pendant la rotation,
dans lesquels les moyens sont séparés entre eux de manière spatiale.

10. Plateau pour un véhicule selon la revendication 9, **caractérisé en ce que** son épaisseur est constante sur toute sa longueur.

11. Plateau pour un véhicule selon la revendication 10, caractérisé en ce son épaisseur est de 8 mm.
